(19)

Europäisches
Patentamt
European
Patent Office
Office européen
des brevets

(11) **EP 4 151 915 A1**

(12) **EUROPEAN PATENT APPLICATION**
published in accordance with Art. 153(4) EPC

(43) Date of publication:
**22.03.2023 Bulletin 2023/12**

(21) Application number: **20935466.1**

(22) Date of filing: **12.05.2020**

(51) International Patent Classification (IPC):
**F24F 7/08** (2006.01)

(52) Cooperative Patent Classification (CPC):
**F24F 7/08;** Y02B 30/70

(86) International application number:
**PCT/JP2020/018993**

(87) International publication number:
**WO 2021/229687 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **HAMADA, Mamoru**
  **Tokyo 100-8310 (JP)**
• **YASUDA, Masami**
  **Tokyo 100-8310 (JP)**
• **YOSHIDA, Shohei**
  **Tokyo 100-8310 (JP)**
• **HORIE, Hayato**
  **Tokyo 100-8310 (JP)**

(74) Representative: **Studio Torta S.p.A.**
**Via Viotti, 9**
**10121 Torino (IT)**

(54) **HEATING CONTROL DEVICE AND HEATING CONTROL PROGRAM**

(57)    A heating control device (700) includes an estimating unit (711) to estimate a latent heat load of air present in a ventilation target space as a ventilation target and a heating control unit (712) to control, in accordance with the latent heat load estimated by the estimating unit (711), a temperature of heating outside air by a heat exchanger (26) to heat outside air supplied to the ventilation target space, via control of a condensation temperature of a refrigerant in the heat exchanger (26). The estimating unit (711) estimates the latent heat load from $\Delta X$, which is a value obtained by subtracting, from a target absolute humidity ($X0$) set by a temperature/humidity setting device (520) to set a target humidity of an interior (500) as the ventilation target space, an absolute humidity ($Xi$) of the interior (500) detected by an indoor humidity sensor (501).

Fig. 7

**Description**

**Technical Field**

The present disclosure relates to a heating control device and heating control program for performing heating control of air humidified by a humidifying element.

**Background Art**

In a conventional air conditioning system, a ventilation device system and an indoor unit system each have a refrigerating cycle. A ventilation device of the ventilation device system performs operation of supplying outdoor fresh air to the interior. When enthalpy of air introduced from outside air is higher than enthalpy of indoor air, the load is a cooling load. In the case of the cooling load, outdoor air may be cooled by the ventilation device and introduced to the interior. On the other hand, when enthalpy of air introduced from outside air is lower than enthalpy of indoor air, the load is a heating load. In the case of the heating load, outdoor air may be heated by the ventilation device and introduced to the interior.

The refrigerating cycle of the indoor unit system is configured of a compressor, a four-way valve, an outdoor heat exchanger, expansion means, and an indoor heat exchanger. The refrigerating cycle of the ventilation device system is configured of a compressor, a four-way valve, an outdoor heat exchanger, expansion means, and a heat exchanger for the ventilation device. The refrigerating cycles of the indoor unit system and the ventilation device system are filled with a refrigerant. At the time of cooling, the refrigerant compressed by the compressor becomes a gas refrigerant at high temperature and high pressure, and is sent to the outdoor heat exchanger. The refrigerant flowing into the outdoor heat exchanger is liquefied by emitting heat to air. The liquefied refrigerant is decompressed by the expansion means to become in a gas-liquid two phase state, and is gasified by absorbing heat from ambient air by the indoor heat exchanger or the heat exchanger for the ventilation device. On the other hand, air is deprived of heat and thus becomes cooled air to cool an indoor space. The gasified refrigerant returns to the compressor.

At the time of heating, the refrigerant compressed by the compressor becomes a gas refrigerant at high temperature and high pressure, and is sent to the indoor heat exchanger or the heat exchanger for the ventilation device. The refrigerant flowing into the indoor heat exchanger or the heat exchanger for the ventilation device is liquefied by emitting heat to air. On the other hand, air is provided with heat and thus becomes heated air. The liquefied refrigerant is decompressed by the expansion means to become a gas-liquid two phase state, and is gasified by absorbing heat from ambient air by the outdoor heat exchanger. The gasified refrigerant returns to the compressor. Air heated by the indoor heat exchanger is supplied as it is to an air conditioning space to heat the space. Air heated by the heat exchanger for the ventilation device passes through a humidifying element installed on a leeward side to become humidified air, which is supplied to the air conditioning space to humidify the space.

As prior art, there is a technique of adjusting the amount of heating in a heat exchanger for a ventilation device in accordance with the temperature of indoor air so that the indoor temperature is not excessively increased and adjusting bypass air quantity inside the ventilation device in accordance with indoor humidity (for example, Patent Literature 1).

**Citation List**

**Patent Literature**

Patent Literature 1: WO 2019/008694 pamphlet

**Summary of Invention**

**Technical Problem**

In conventional technologies, heating control is not performed on outside air flowing into the ventilation device based on the degree of the latent heat load of air in the air conditioning space. Thus, even if the latent heat load is small and the amount of heating is not required to be large, outside air is heated by the heat exchanger for the ventilation device with a larger amount of heating than a necessary amount of heating, and energy losses are produced.

The present disclosure is to provide a heating control device which performs heating control on outside air flowing into a ventilation device in accordance with the latent heat load of air in an air conditioning space.

**Solution to Problem**

A heating control device according to the present invention includes:

an estimating unit to estimate a latent heat load of air present in a ventilation target space as a ventilation target; and
a heating control unit to control a temperature of outside air heated by a heater, the outside air being supplied to the ventilation target space, in accordance with the estimated latent heat load.

**Advantageous Effects of Invention**

Since the heating control device of the present disclosure includes the estimating unit and the heating control unit, heating control can be performed on outside air flowing into the ventilation device in accordance with the latent heat load of air in the air conditioning space. Thus, according to the heating control device of the present disclosure, energy saving can be achieved when outside air is heated by the heat exchanger for the ventilation device.

**Brief Description of Drawings**

Fig. 1 is a drawing of Embodiment 1 and is a schematic diagram of an air conditioning system 100.
Fig. 2 is a drawing of Embodiment 1 and is a schematic diagram of a first refrigerant system 11.
Fig. 3 is a drawing of Embodiment 1 and is a schematic diagram of a second refrigerant system 21.
Fig. 4 is a drawing of Embodiment 1, illustrating a ventilation device 210.
Fig. 5 is a drawing of Embodiment 1, illustrating a psychrometric chart.
Fig. 6 is a drawing of Embodiment 1, illustrating a relation between $\Delta X$ and a condensation temperature CT of a refrigerant.
Fig. 7 is a drawing of Embodiment 1, illustrating the hardware structure of a heating control device 700.
Fig. 8 is a drawing of Embodiment 1 and is a flowchart illustrating the operation of the heating control device 700.
Fig. 9 is a drawing of Embodiment 1 and is a drawing of supplementing the hardware structure of the heating control device 700.

**Description of Embodiments**

An embodiment is described below by using the drawings. Note that identical or corresponding portions in the respective drawings are provided with the same reference characters. In the description of the embodiment, description of identical or corresponding portions is omitted or simplified as appropriate.

Embodiment 1.

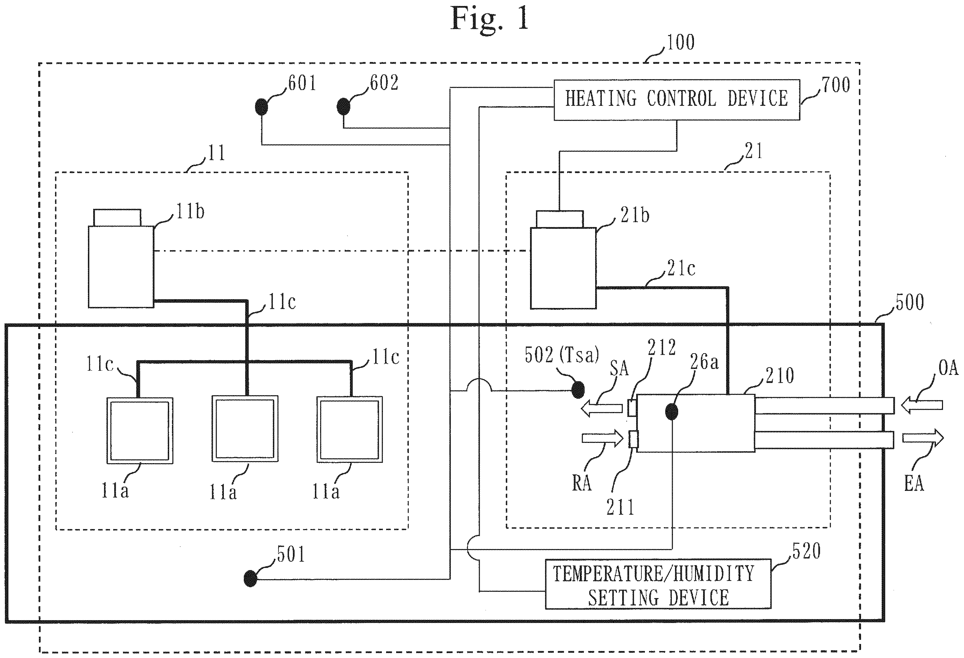

Fig. 1 is a schematic diagram of an air conditioning system 100 of Embodiment 1. Fig. 1 is a schematic plan view of an interior 500. The air conditioning system 100 includes a first refrigerant system 11, a second refrigerant system 21, a system control device 30, and a heating control device 700. The first refrigerant system 11 and the second refrigerant system 21 are refrigerating cycles. In an interior 500, an indoor unit 11a of the first refrigerant system 11 and a ventilation device 210 of the second refrigerant system 21 are arranged. Outside the interior 500, an outdoor unit 11b of the first refrigerant system 11 and an outdoor unit 21b of the second refrigerant system 21 are arranged. The system control device 30 controls the first refrigerant system 11 and the second refrigerant system 21.

<First Refrigerant System 11>

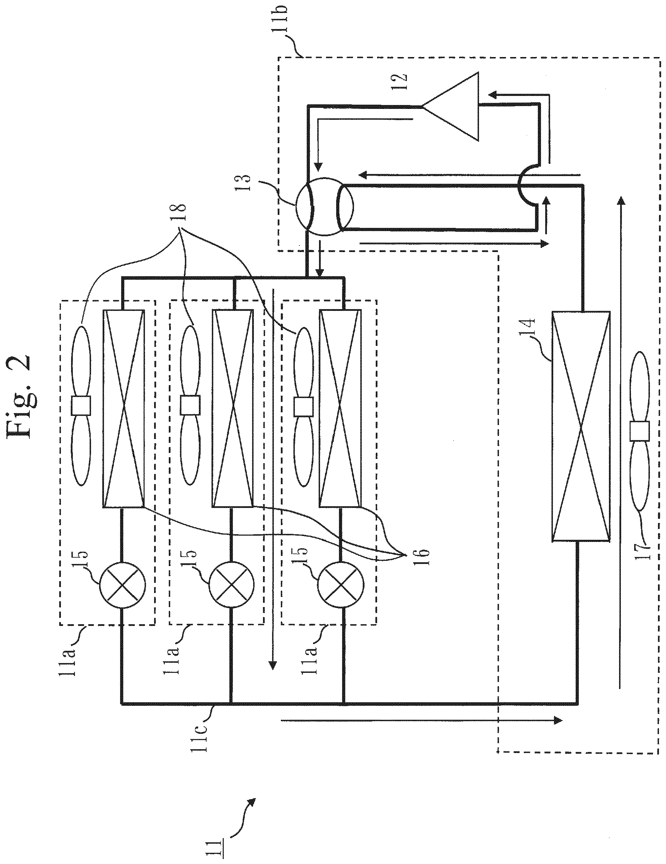

Fig. 2 is a schematic diagram of the first refrigerant system 11. Arrows in Fig. 2 indicate directions in which a refrigerant flows. Fig. 2 illustrates the structure of the first refrigerant system 11. The first refrigerant system 11 includes a compressor 12, a four-way valve 13, an outdoor heat exchanger 14, an expansion valve 15, an indoor heat exchanger 16, an air blower 17 for the outdoor heat exchanger, and an air blower 18 for the indoor heat exchanger. The indoor unit 11a is configured of the expansion valve 15, the indoor heat exchanger 16, and the air blower 18. One or a plurality of indoor units 11a are installed.

<Second Refrigerant System 21>

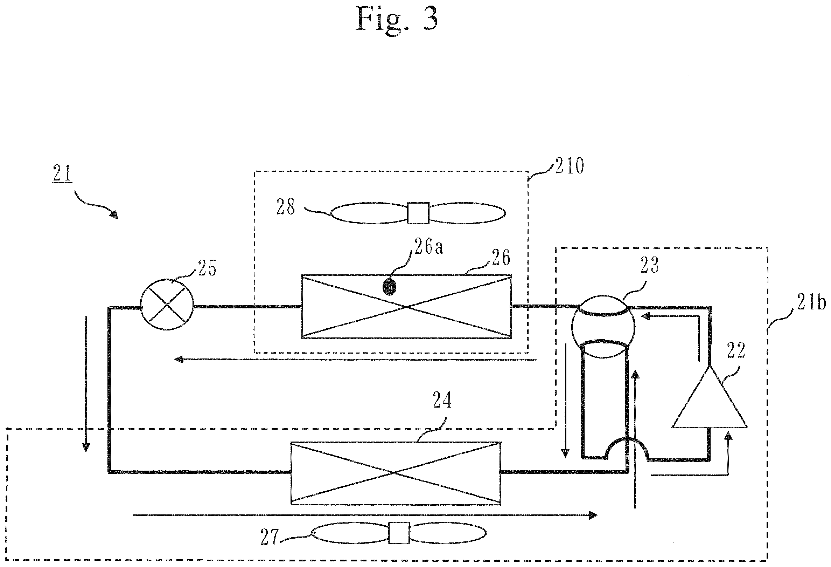

Fig. 3 is a schematic diagram of the second refrigerant system 21. Arrows in Fig. 3 indicate directions in which the refrigerant flows. The second refrigerant system 21 includes a compressor 22, a four-way valve 23, an outdoor heat exchanger 24, an expansion valve 25, a heat exchanger 26 for use in the ventilation device 210, an air blower 27 for use in the outdoor heat exchanger 24, and an air blower 28 for ventilation. The heat exchanger 26 and the air blower 28 are arranged inside the ventilation device 210. The heat exchanger 26 has arranged therein a condensation temperature sensor 26a which detects a condensation temperature of the refrigerant in the heat exchanger 26.

<Ventilation Device 210>

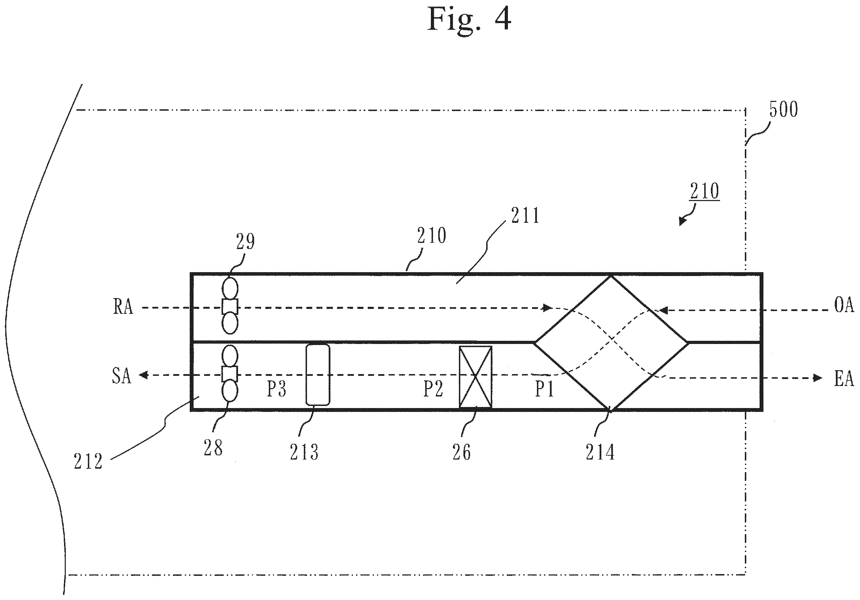

Fig. 4 illustrates the ventilation device 210. The ventilation device 210 includes a heat exchanger 26 of the second refrigerant system 21, the air blower 28 of the second refrigerant system 21, an air blower 29 for ventilation, a humidifying element 213, and a total heat exchanger 214. By the total heat exchanger 214, return air and outside air exchange total heat. By the humidifying element 213, outside air is humidified. As illustrated in Fig. 4, the ventilation device 210 has an exhaust pipe 211 which exhausts return air of the interior 500 as exhaust air and an air supply pipe 212 which supplies outside air as supply air to the interior 500. In Fig. 4, return air, exhaust air, outside air, and supply air are denoted as RA, EA, OA, and SA, respectively. In the ventilation device 210, return air is suctioned by the air blower 29 into the exhaust pipe 211. Return air exchanges total heat with outside air at the total heat exchanger 214, and passes through the total heat exchanger 214 to be exhausted as exhaust air. Outside air is suctioned by the air blower 28 into the air supply pipe 212. Outside air exchanges total heat with return air at the total heat exchanger 214, and passes through the total heat exchanger 214, the heat exchanger 26, and the humidifying element 213 to be supplied as supply air to the interior 500. Outside air is heated at the heat exchanger 26 and humidified when passing through the humidifying element 213 to be supplied to the interior 500.

<Heating control Device 700>

As illustrated in Fig. 1, the air conditioning system 100 includes a temperature/humidity setting device 520 which accepts setting of a target temperature of the interior 500 and a target humidity of the interior 500 and a heating control device 700 which estimates a latent heat load and controls the condensation temperature of the refrigerant in the heat exchanger 26 based on the estimation result. The temperature/humidity setting device 520 is connected to the heating control device 700. Also, the air conditioning system 100 includes an indoor humidity sensor 501, a heated outside air temperature sensor 502, an outside air humidity sensor 601, an outside air temperature sensor 602, and a condensation temperature sensor 26a. The indoor humidity sensor 501 detects an indoor humidity. The heated outside air temperature sensor 502 detects a blowout temperature Tsa of supply air blown out from the air supply pipe 212. The outside air humidity sensor 601 detects a humidity of outside air. The outside air temperature sensor 602 detects a temperature of outside air. The condensation temperature sensor 26a detects a condensation temperature of the refrigerant in the heat exchanger 26. The indoor humidity sensor 501, the heated outside air temperature sensor 502, the outside air humidity sensor 601, the outside air temperature sensor 602, and the condensation temperature sensor 26a are connected to the heating control device 700.

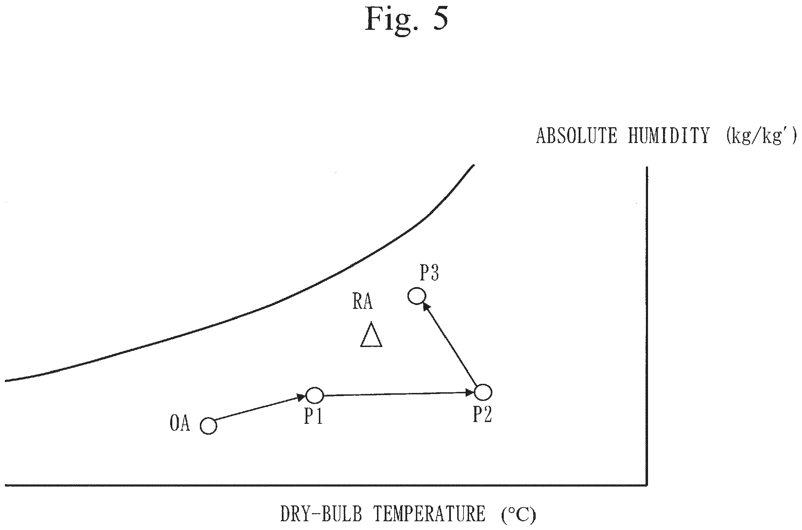

Fig. 5 is a psychrometric chart. P1, P2, and P3 illustrated in the psychrometric chart of Fig. 5 correspond to air states at positions P1, P2, and P3 of Fig. 4. P1 in Fig. 4 is a position of outside air immediately after passing through the total heat exchanger 214, P2 is a position of outside air immediately after passing through the heat exchanger 26, and P3 is a position of outside air immediately after passing through the humidifying element 213. With reference to Fig. 5, changes of air inside the ventilation device 210 are described. The ventilation device 210 takes outside air by the air blower 28 into the inside of the ventilation device 210. The air blower 29 takes return air of the interior 500 into the inside of the ventilation device 210. Outside air exchanges total heat with return air at the total heat exchanger 214, thereby becoming in a state in which the temperature and the humidity both increase. This state arises at P1 in Fig. 4 and Fig. 5. Thereafter, outside air is heated at the heat exchanger 26. This state arises at P2 in Fig. 4 and Fig. 5. Outside air heated at the heat exchanger 26 passes through the humidifying element 213 to be humidified by the humidifying element 213 to become humidity-increased, temperature-decreased humidified air, and is supplied as supply air to the interior 500. The state of outside air passing through the humidifying element 213 arises at P3 in Fig. 4 and Fig. 5.

Regarding outside air heated at the heat exchanger 26, that is, outside air at P2 in Fig. 5, as a difference of a difference $\Delta Tdw$ between a dry-bulb temperature and a wet-bulb temperature is larger, the amount of humidifying outside air by the humidifying element 213 is larger. When the amount of heating by the heat exchanger 26 is large, the point P2 in Fig. 5 moves to a right direction on the psychrometric chart to increase $\Delta Tdw$, and the amount of humidifying outside air by the humidifying element 213 increases. By contrast, when the amount of heating by the heat exchanger 26 is small, the point P2 in Fig. 5 does not move so much from the point P1 to the right direction to decrease $\Delta Tdw$, and

the amount of humidifying outside air by the humidifying element 213 decreases. That is, by adjusting the point P2 by the amount of heating at the heat exchanger 26, the amount of humidifying outside air by the humidifying element 213 can be adjusted.

A method of adjusting the amount of humidifying outside air by the humidifying element 213 is described. The amount of humidifying outside air by the humidifying element 213 is required to be adjusted so as to be equal to a latent heat load. Here, the latent heat load is a humidifying load with respect to air of the interior 500. Alternatively, the latent heat load is the amount of humidification required to maintain the humidity of the interior 500 at a target value. That is, the following expression 1 holds.

$$\text{Latent heat load} = \text{humidification load} = \text{the amount of humidification required to}$$

$$\text{maintain the indoor humidity at a target value} \quad (1)$$

An estimating unit 711 described below estimates a latent heat load for achieving a target absolute humidity X0 of the interior 500 set by the temperature/humidity setting device 520. A heating control unit 712 described below controls the condensation temperature of the refrigerant in the heat exchanger 26 in accordance with the latent heat load estimated by the estimating unit 711. In the heating control device 700, the latent heat load, that is, the amount of humidification for achieving the target absolute humidity X0 of the interior 500, is estimated by the following expression 2. The estimating unit 711 estimates a difference $\Delta X$ between the target absolute humidity X0 and an absolute humidity Xi of the current interior detected by the indoor humidity sensor 501 as a latent heat load.
That is,

$$\text{X0-Xi} = \Delta X \quad (2)$$

X0: Target absolute humidity set by the temperature/humidity setting device 520
Xi: Current absolute humidity of the interior 500

In the following, the latent heat load is described as $\Delta X$ based on expression 1. In the following, the latent heat load may be denoted as a latent heat load $\Delta X$.

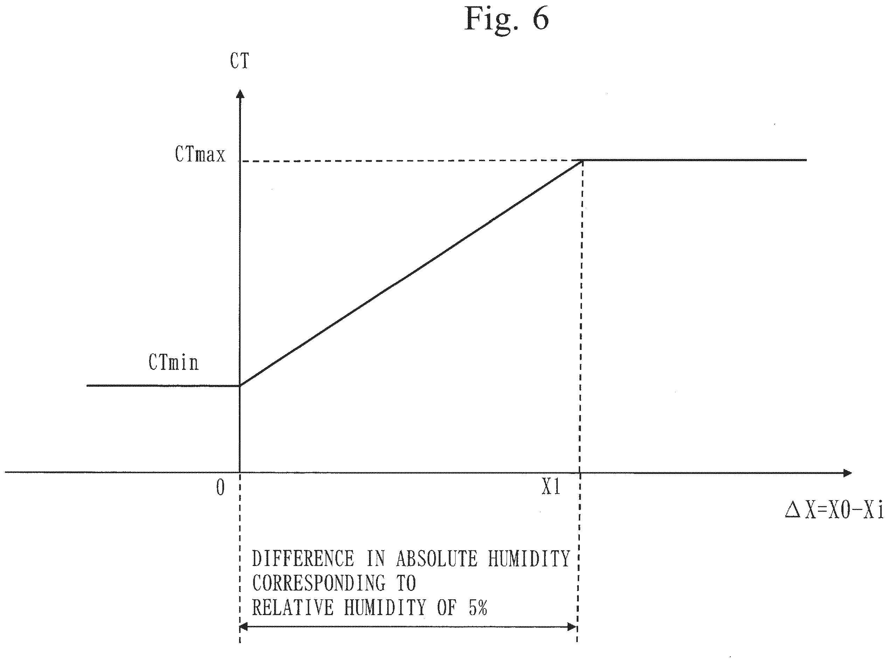

Fig. 6 is a graph illustrating a relation between the latent heat load $\Delta X$ and a condensation temperature CT of the refrigerant in the heat exchanger 26. The horizontal axis represents the latent heat load $\Delta X$, and the vertical axis represents the condensation temperature CT. The heating control unit 712 changes the condensation temperature CT of the refrigerant between a maximum value CTmax and a minimum value CTmin in accordance with the value of the latent heat load $\Delta X$. By following the graph of Fig. 6, the heating control unit 712 increases the condensation temperature CT as $\Delta X$ is larger. As $\Delta X$ is larger, that is, as Xi is smaller with respect to X0, the condensation temperature CT is higher. When $\Delta X$ exceeds X1, the condensation temperature CT has the maximum value CTmax. When $\Delta X$ is equal to or smaller than 0, that is, when Xi is equal to or larger than X0, the condensation temperature CT has the minimum value CTmin.

<X1 Determination Method>

A method of determining X1 in Fig. 6 is described. The value of X1 on the horizontal axis of Fig. 6 adopts, for example, a difference in absolute humidity corresponding to a relative humidity of 5%. A specific example is as follows. It is assumed that a target relative humidity at a temperature of 22°C is 50% and an absolute humidity of this target relative humidity is a (kg/kg'). It is assumed that an absolute humidity of a relative humidity of 45% at a temperature of 22°C is b (kg/kg'). A difference (a-b) in absolute humidity corresponding to a relative humidity of 5% is adopted as X1.

<Method of Determining CTmax and CTmin>

A method of determining the condensation temperature CTmax and the condensation temperature CTmin in Fig. 6 is described. [CTmax, CTmin] represents a set of the condensation temperature CTmax and the condensation temperature CTmin. [CTmax, CTmin] is retained by the heating control unit 712. One set of [CTmax, CTmin] may be retained, or the heating control unit 712 may retain [CTmax, CTmin] for each outside air condition. As the outside air temperature decreases, the absolute humidity of outside air decreases. Thus, the outside air condition may be the outside air temperature or outside air humidity. Thus, it is preferable that CTmax and CTmin are higher as the outside air temperature decreases or the outside air humidity decreases.

In the following example, the outside air condition is assumed to be the outside air temperature. Regarding an outside air temperature T1 and an outside air temperature T2, the outside air temperature T2 is assumed to be higher than the outside air temperature T1.

That is, it is assumed that

$$T2 > T1.$$

It is assumed that at the outside air temperature T1,

$$[CTmax, CTmin] = [CTmax1, CTmin1]$$

and
at the outside air temperature T2,

$$[CTmax, CTmin] = [CTmax2, CTmin2].$$

Since T2 > T1, a relation holds in which

$$CTmax1 > CTmax2$$

and

$$CTmin1 > CTmin2.$$

In the above-described [CTmax, CTmin] determination method, the [CTmax, CTmin] determination method when the outside air condition is varied is described. In the following, a method is described in which CTmax and CTmin are determined in consideration of the number of people who are present in the interior 500. First, CTmax can be determined as follows. In a certain outside air humidity condition, when there are as many people in the interior 500 as a designed number of people who are present indoors, CTmax is determined as a condensation temperature which ensures a necessary latent heat load. On the other hand, CTmin can be determined as follows. In a certain outside air humidity condition, when there are a few number of people, for example, when no one is present in the interior 500, CTmin is determined as a condensation temperature which ensures a necessary latent heat load. In this manner, [CTmax, CTmin] is determined in accordance with the number of people who are present indoors. With this method of determining the condensation temperature CTmax and the condensation temperature CTmin, a range in which shortage of humidification or excessive humidification does not occur can be determined for each outside air condition. Thus, comfortability and energy-saving can be ensured.

As illustrated in Fig. 6, the heating control device 700 determines the condensation temperature CT of the refrigerant from the latent heat load ΔX and controls the compressor 22 so that the determined condensation temperature CT is achieved. Thus, when the latent heat load ΔX is small, the condensation temperature CT is decreased to allow the compressor 22 to be operated, and efficiency of a refrigerating cycle as the second refrigerant system 21 is improved. However, if the condensation temperature CT of the refrigerant in the heat exchanger 26 is decreased to decrease the amount of heating by the heat exchanger 26, the point P2 in Fig. 5 is close to the point P1, and the blowout temperature Tsa of blowout air at the point P3 is decreased. When the blowout temperature Tsa is decreased, there is a possibility that occupants feel chilly.

Thus, the heating control unit 712 has an energy-saving priority mode and a blowout-temperature priority mode, and changes control operation depending on which mode the user selects. The temperature/humidity setting device 520 has a mode selection function of allowing the user to select either of the energy-saving priority mode and the blowout-temperature priority mode. When the user selects either mode by using the temperature/humidity setting device 520, the heating control unit 712 detects the selected mode.

When the energy-saving priority mode is selected, the heating control unit 712 continues operation of the compressor 22 at the condensation temperature CT determined from the graph of Fig. 6. When the blowout-temperature priority mode is selected, the heating control unit 712 increases the condensation temperature CT by increasing the frequency of the compressor 22 when the blowout temperature Tsa detected by the heated outside air temperature sensor 502 is smaller than a threshold to control so that the blowout temperature Tsa is equal to or larger than the threshold TH. The energy-saving priority mode and the blowout-temperature priority mode will be described further below in description of operation.

*** Description of Structure ***

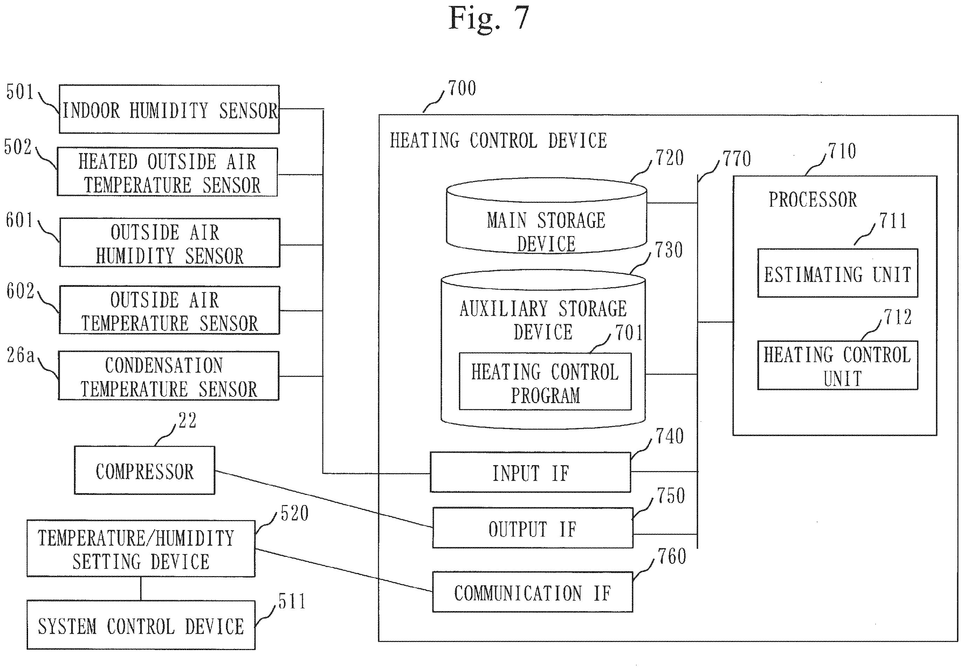

Fig. 7 illustrates the hardware structure of the heating control device 700. With reference to Fig. 7, the hardware structure of the heating control device 700 is described.

The heating control device 700 is a computer. The heating control device 700 includes a processor 710. The heating control device 700 includes, in addition to the processor 710, other pieces of hardware such as a main storage device 720, an auxiliary storage device 730, an input IF 740, an output IF 750, and a communication IF 760. The processor 710 is connected to the other pieces of hardware via a signal line 770 to control the other hardware.

The heating control device 700 includes, as functional elements, the estimating unit 711 and the heating control unit 712. The functions of the estimating unit 711 and the heating control unit 712 are implemented by a heating control program 701.

The processor 710 is a device which executes the heating control program 701. The heating control program 701 is a program which implements the functions of the estimating unit 711 and the heating control unit 712. The processor 710 is an IC (Integrated Circuit) which performs arithmetic process. Specific examples of the processor 710 are CPU (Centra Processing Unit), DSP (Digital Signal Processor), and GPU (Graphics Processing Unit).

The main storage device 720 is a storage device. Specific examples of the main storage device 720 are SRAM (Static Random Access Memory) and DRAM (Dynamic Random Access Memory). The main storage device 720 retains the arithmetic results of the processor 710.

The auxiliary storage device 730 is a storage device which stores data in a nonvolatile manner. The auxiliary storage device 730 has the heating control program 701 stored therein. A specific example of the auxiliary storage device 730 is HDD (Hard Disk Drive). Also, the auxiliary storage device 730 may be a portable recording medium such as SD (registered trademark) (Secure Digital) memory card, NAND flash, flexible disc, optical disc, compact disc, Blu-ray (registered trademark) disc, or DVD (Digital Versatile Disk).

The input IF 740 is a port to which data is inputted from each device. To the input IF 740, the indoor humidity sensor 501, the heated outside air temperature sensor 502, the outside air humidity sensor 601, the outside air temperature sensor 602, and the condensation temperature sensor 26a are connected. The output IF 750 is a port from which data is outputted by the processor 710 to various devices. To the output IF 750, the compressor 22 of the second refrigerant system 21 is connected. The communication IF 760 is a communication port for the processor 710 to communicate with another device. To the communication IF 760, the temperature/humidity setting device 520 is connected. Also, the temperature/humidity setting device 520 is connected to the system control device.

The processor 710 loads the heating control program 701 from the auxiliary storage device 730 into the main storage device 720, and reads and executes the heating control program 701 from the main storage device 720. The heating control device 700 may include a plurality of processors which replace the processor 710. The plurality of these processors share execution of the heating control program 701. As with the processor 710, each processor is a device which executes the heating control program 701. Data, information, signal values, and variable values to be used, processed, or outputted by the heating control program 701 are stored in the main storage device 720, the auxiliary storage device 730, or a register or cache memory in the processor 710.

The heating control program 701 is a program which causes a computer to execute each process, each procedure, or each step when "unit" in each of the estimating unit 711 and the heating control unit 712 is read as "process", "procedure", or "step".

Also, the heating control method is a method to be performed by the heating control device 700 as a computer executing the heating control program 701. The heating control program 701 may be provided as being stored in a computer-readable recording medium or may be provided as a program product.

***Description of Operation***

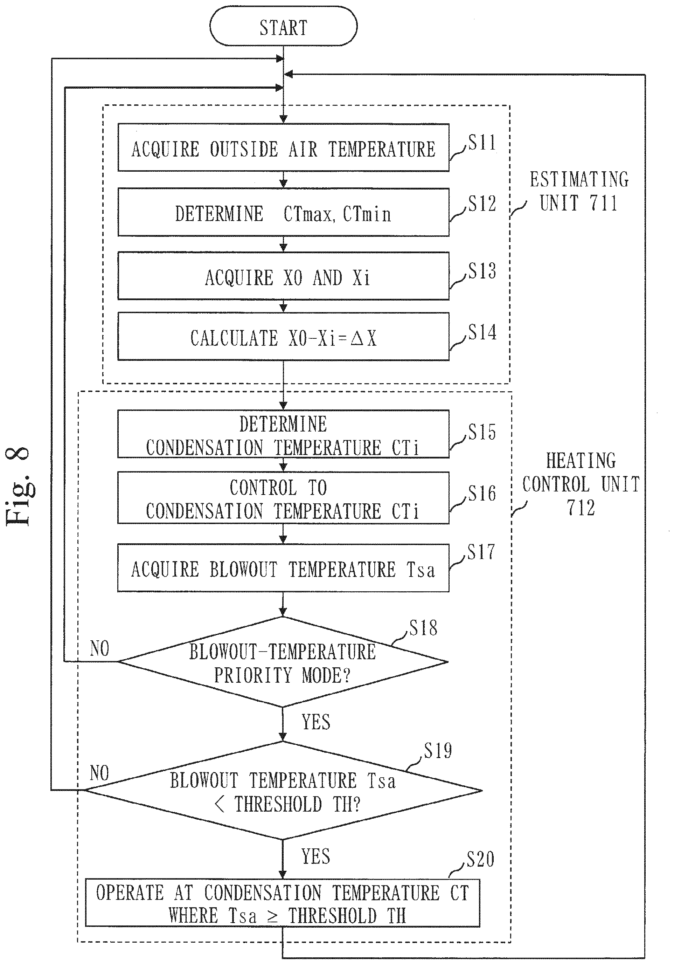

Fig. 8 is a flowchart for describing operation of the heating control device 700. With reference to Fig. 8, the operation of the heating control device 700 is described. The operation procedure of the heating control device 700 corresponds to a heating control method. A program for implementing the operation of the heating control device 700 corresponds to a heating control program.

Step S11 to step S14 represent operation of the estimating unit 711. The estimating unit 711 estimates a latent heat load of air present in a ventilation target space as a ventilation target. The ventilation target space as a ventilation target is a space of the interior 500. Step S15 to step S20 represent operation of the heating control unit 712. The heating control unit 712 controls a temperature of outside air by a heater, the outside air being supplied to the ventilation target space, in accordance with the latent heat load estimated by the estimating unit 711. The heater is the heat exchanger 26. The heat exchanger 26 as a heater is a condenser of the refrigerating cycle device where the refrigerant circulates, the refrigerating cycle device including the compressor 22, the heat exchanger 26 which functions as the condenser, the expansion valve 25 as an expansion mechanism, and the heat exchanger 24 which functions as an evaporator. As control of the temperature of the outside air, the heating control unit 712 controls the condensation temperature of the refrigerant in the heat exchanger 26 as a condenser.

<StepS11>

After the start of operation of the air conditioning system 100, at step S11, the estimating unit 711 acquires, from the outside air temperature sensor 602, the outside air temperature detected by the outside air temperature sensor 602.

<Step S12>

At step S12, the heating control unit 712 determines the first condensation temperature CTmin of the refrigerant and the second condensation temperature CTmax higher than the first condensation temperature CTmin, based on the outside air condition indicating at least either value of a detected temperature of outside air and a detected absolute humidity, which is an absolute humidity detected for outside air. The heating control unit 712 determines a condensation temperature CTi in a range between the first condensation temperature CTmin and the second condensation temperature CTmax. The first condensation temperature is CTmin described below, and the second condensation temperature is CTmax described below.

A specific process is as follows. The estimating unit 711 determines one [CTmax, CTmin] from among a plurality of [CTmax, CTmin], based on the acquired outside air temperature. The estimating unit 711 has the plurality of [CTmax, CTmin]. Each [CTmax, CTmin] of the plurality of [CTmax, CTmin] is associated with an outside air temperature. For example, [CTmax(1), CTmin(1)] is associated with a range of outside air temperatures equal to or higher than 18°C and lower than 20°C, and [CTmax(2), CTmin(2)] is associated with a range of outside air temperatures equal to or higher than 20°C and lower than 22°C. Thus, the estimating unit 711 can determine one [CTmax, CTmin] from the acquired outside air temperature. Note that when a plurality of [CTmax, CTmin] are associated with an outside air humidity, [CTmax, CTmin] may be determined from the outside air humidity detected by the outside air humidity sensor 601.

[CTmax, CTmin] are stored in the auxiliary storage device 730.

As described above, the outside air condition includes a detected temperature of outside air, and the heating control unit 712 determines the first condensation temperature CTmin and the second condensation temperature CTmax at higher temperatures as the detected temperature of outside air is lower. Also, the outside air condition includes a detected humidity of outside air, and the heating control unit 712 determines the first condensation temperature CTmin and the second condensation temperature CTmax at higher temperatures as the detected humidity of outside air is lower.

<Step S13>

At step S13, the estimating unit 711 acquires the current absolute humidity $Xi$ of the interior 500 from the indoor humidity sensor 501. Also, the estimating unit 711 acquires the target absolute humidity $X0$ of the interior 500 set by the temperature/humidity setting device 520.

In this manner,

<Step S14>

At step S14, the estimating unit 711 calculates the difference $\Delta X$ between the target absolute humidity $X0$ and the absolute humidity $Xi$ of the interior 500. The estimating unit 711 calculates $X0 - Xi = \Delta X$.

The estimating unit 711 estimates the latent heat load $\Delta X$ based on $X0$ as the target humidity set by the temperature/humidity setting device 520 as a setting device which sets a target humidity in the ventilation target space and the detected humidity in the ventilation target space detected by the indoor humidity sensor 501.

Note that in place of the target absolute humidity $X0$, the estimating unit 711 may acquire a target relative humidity from the temperature/humidity setting device 520 and may acquire the temperature of the interior 500 from the temperature sensor which detects the temperature of the interior 500. The estimating unit 711 may calculate the target absolute humidity $X0$ from the target relative humidity and the temperature of the interior 500. Similarly, in place of the absolute humidity $Xi$, the estimating unit 711 may acquire a relative humidity of the interior 500 from the humidity sensor which detects the relative humidity of the interior 500 and may acquire the temperature of the interior 500 from the temperature sensor which detects the temperature of the interior 500. The estimating unit 711 may calculate the absolute humidity $Xi$ of the interior 500 from the relative humidity of the interior 500 and the temperature of the interior 500.

<Step S15>

At step S15, the heating control unit 712 generates a graph of Fig. 6 from X1, CTmax, and CTmin, and determines the condensation temperature CTi corresponding to the ΔX calculated at step S14. Note that the heating control unit 712 is assumed to previously have the value of X1, the method of determining which has been described in the description of Fig. 6. X1 is stored in the auxiliary storage device 730.

<Step S16>

At step S16, the heating control unit 712 determines the condensation temperature CTi of the refrigerant from the value indicated by the latent heat load ΔX, and controls the operation frequency of the compressor 22 so that the condensation temperature of the refrigerant in the heat exchanger 26 as a condenser is closer to the determined condensation temperature CTi. Description is specifically made below. The heating control unit 712 controls the operation frequency of the compressor 22 so that the condensation temperature CT of the refrigerant in the heat exchanger 26 is the determined condensation temperature CTi. The heating control unit 712 acquires the condensation temperature of the refrigerant detected by the condensation temperature sensor 26a. With reference to the condensation temperature of the refrigerant detected by the condensation temperature sensor 26a, the heating control unit 712 controls the operation frequency of the compressor 22 so that the condensation temperature CT of the medium is the determined condensation temperature CTi.

When the determined condensation temperature CTi is higher than the current condensation temperature of the refrigerant detected by the condensation temperature sensor 26a, the heating control unit 712 performs control of increasing the operation frequency of the compressor 22. When the determined condensation temperature CTi is lower than the current condensation temperature of the refrigerant detected by the condensation temperature sensor 26a, the heating control unit 712 performs control of decreasing the operation frequency of the compressor 22.

<Step S17>

At step S17, the heating control unit 712 acquires, from the heated outside air temperature sensor 502, the blowout temperature Tsa detected by the heated outside air temperature sensor 502.

<Step S18>

At step S18, the heating control unit 712 determines whether the mode is the blowout-temperature priority mode. The heating control unit 712 has already acquired information about whether the mode is the blowout-temperature priority mode from the temperature/humidity setting device 520. When the mode is not the blowout-temperature priority mode, the process returns to step S11. When the mode is the blowout-temperature priority mode, the process proceeds to step S19. The blowout-temperature priority mode is a mode in which the heating control unit 712 controls the blowout temperature Tsa so that the blowout temperature Tsa is equal to or larger than the threshold TH.

<Step S19>

At step S19, the heating control unit 712 determines whether the blowout temperature Tsa is smaller than the threshold TH. When the blowout temperature Tsa is not smaller than the threshold TH, the process returns to step S11. When the blowout temperature Tsa is smaller than the threshold TH, the process proceeds to step S20.

<Step S20>

At step S20, the heating control unit 712 controls the operation frequency of the compressor 22 so that the blowout temperature Tsa is equal to or larger than the threshold TH. Specific control is as follows.

The heating control unit 712 has the threshold TH. The threshold TH is stored in the auxiliary storage device 730. The heating control unit 712 performs control of increasing the operation frequency of the compressor 22 when the blowout temperature Tsa, which is the temperature of heated outside air detected by the heated outside air temperature sensor 502 which detects the temperature of heated outside air, is smaller than the threshold TH. Heated outside air is outside air supplied to the interior 500 as a ventilation target space, and is outside air heated by the heat exchanger 26 as a heater.

***Description of Effects of Embodiment 1***

The heating control device 700 controls the condensation temperature of the refrigerant of the heat exchanger 26 in accordance with the latent heat load ΔX. When the latent heat load ΔX is low, the heating control device 700 decreases the condensation temperature CT of the refrigerant in the heat exchanger 26 to decrease the amount of heating outside air by the heat exchanger 26. Thus, efficiency of operation of the refrigerating cycle is enhanced, and energy can be saved. Also, when the latent heat load ΔX is high, the heating control device 700 increases the condensation temperature CT of the refrigerant in the heat exchanger 26 to increase the amount of heating outside air by the heat exchanger 26. Thus, shortage of the amount of humidification of outside air can be avoided.

Also, as illustrated at step S20 of Fig. 8, the heating control unit 712 performs control in accordance with the blowout-temperature priority mode. Thus, comfortability in the interior 500 can also be maintained.

<Supplement to Hardware Structure>

While the functions of the estimating unit 711 and the heating control unit 712 are implemented by software in the heating control device 700 of Fig. 7, the functions of the heating control device 700 may be implemented by hardware.

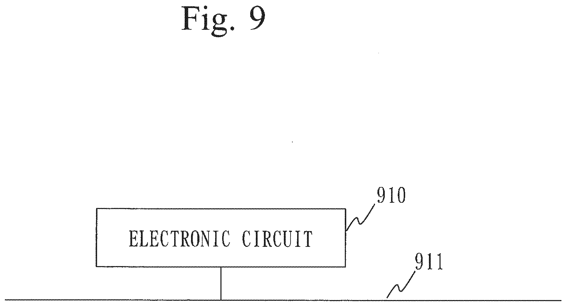

Fig. 9 illustrates a structure in which the functions of the heating control device 700 are implemented by hardware. An electronic circuit 910 of Fig. 9 is a dedicated electronic circuit which implements the functions of the estimating unit 711 and the heating control unit 712 of the heating control device 700. The electronic circuit 910 is connected to a signal line 911. The electronic circuit 910 is, specifically, a single circuit, composite circuit, programmed processor, parallel-programmed processor, logic IC, GA, ASIC, or FPGA. GA is an abbreviation of Gate Array. ASIC is an abbreviation of Application Specific Integrated Circuit. FPGA is an abbreviation of Field-Programmable Gate Array. The functions of the components of the heating control device 700 may be implemented by one electronic circuit or may be implemented as being dispersed into a plurality of electronic circuits. Also, part of the functions of the components of the heating control device 700 may be implemented by an electronic circuit and the remaining functions may be implemented by software.
Each of the processor 710 and the electronic circuit 910 is also referred to as processing circuitry. In the heating control device 700, the functions of the estimating unit 711, the heating control unit 712, the main storage device 720, the auxiliary storage device 730, the input IF 740, the output IF 750, and the communication IF 760 may be implemented by processing circuitry.

**Reference Signs List**

Tsa: blowout temperature; TH: threshold; 100: air conditioning system; 11: first refrigerant system; 11a: indoor unit; 11b: outdoor unit; 11c: refrigerant pipe; 12: compressor; 13: four-way valve; 14: outdoor heat exchanger; 15: expansion valve; 16: indoor heat exchanger; 17: air blower; 18: air blower; 21: second refrigerant system; 21b: outdoor unit; 21c: refrigerant pipe; 22: compressor; 23: four-way valve; 24: heat exchanger; 25: expansion valve; 26: heat exchanger; 26a: condensation temperature sensor; 27: air blower; 28: air blower; 29: air blower; 30: system control device; 210: ventilation device; 211: exhaust pipe; 212: air supply pipe; 213: humidifying element; 214: total heat exchanger; 500: interior; 501: indoor humidity sensor; 502: heated outside air temperature sensor; 511: system control device; 520: temperature/humidity setting device; 601: outside air humidity sensor; 602: outside air temperature sensor; 700: heating control device; 701: heating control program; 710: processor; 711: estimating unit; 712: heating control unit; 720: main storage device; 730: auxiliary storage device; 740: input IF; 750: output IF; 760: communication IF; 770: signal line; 910: electronic circuit; 911: signal line

**Claims**

**1.** A heating control device comprising:

an estimating unit to estimate a latent heat load of air present in a ventilation target space as a ventilation target; and
a heating control unit to control a temperature of outside air heated by a heater, the outside air being supplied to the ventilation target space, in accordance with the estimated latent heat load.

**2.** The heating control device according to claim 1, wherein

the heater is a condenser of a refrigerating cycle device where a refrigerant circulates, the refrigerating cycle device including a compressor, the condenser, an expansion mechanism, and an evaporator; and

the heating control unit controls a condensation temperature of the refrigerant in the condenser as control of the temperature of the outside air.

3. The heating control device according to claim 2, wherein
the heating control unit determines the condensation temperature of the refrigerant from a value indicated by the latent heat load, and controls an operation frequency of the compressor so that the condensation temperature of the refrigerant in the condenser is closer to the determined condensation temperature.

4. The heating control device according to claim 3, wherein
the heating control unit performs control of increasing the operation frequency of the compressor when the determined condensation temperature is higher than a current said condensation temperature of the refrigerant, and performs control of decreasing the operation frequency of the compressor when the determined condensation temperature is lower than the current condensation temperature of the refrigerant.

5. The heating control device according to claim 3 or 4, wherein
the heating control unit has a threshold, and performs control of increasing the operation frequency of the compressor when a temperature of heated outside air, which is the outside air supplied to the ventilation target space and heated by the heater, detected by a heated outside air temperature sensor to detect the temperature of the heated outside air is smaller than the threshold.

6. The heating control device according to any one of claims 3 to 5, wherein
the heating control unit determines a first condensation temperature of the refrigerant and a second condensation temperature higher than the first condensation temperature, based on an outside air condition indicating at least either value of a detected temperature of the outside air and a detected absolute humidity, which is an absolute humidity detected for the outside air, and determines the condensation temperature in a range between the first condensation temperature and the second condensation temperature.

7. The heating control device according to claim 6, wherein

the outside air condition includes the detected temperature of the outside air, and
the heating control unit determines the first condensation temperature and the second condensation temperature at higher temperatures as the detected temperature of the outside air is lower.

8. The heating control device according to claim 6, wherein

the outside air condition includes a detected humidity of the outside air, and
the heating control unit determines the first condensation temperature and the second condensation temperature at higher temperatures as the detected humidity of the outside air is lower.

9. The heating control device according to any one of claims 1 to 8, wherein
the estimating unit estimates the latent heat load based on a target humidity set by a setting device to set the target humidity in the ventilation target space and a detected humidity in the ventilation target space detected by a humidity sensor.

10. A heating control program that causes a computer to execute:

an estimation process of estimating a latent heat load of air present in a ventilation target space as a ventilation target; and
a heating control process of controlling a temperature of outside air being heated by a heater, the outside air being supplied to the ventilation target space, in accordance with the estimated latent heat load.

Fig. 1

EP 4 151 915 A1

Fig. 2

# Fig. 3

EP 4 151 915 A1

Fig. 4

# Fig. 5

# Fig. 6

CT

CTmax

CTmin

0                                    X1                    $\triangle X = X0 - Xi$

DIFFERENCE IN ABSOLUTE HUMIDITY
CORRESPONDING TO
RELATIVE HUMIDITY OF 5%

EP 4 151 915 A1

Fig. 7

EP 4 151 915 A1

Fig. 8

START

```
ACQUIRE OUTSIDE AIR TEMPERATURE    S11  ┐
DETERMINE  CTmax, CTmin            S12  │  ESTIMATING
ACQUIRE X0 AND Xi                  S13  │  UNIT 711
CALCULATE X0-Xi=△X                 S14  ┘
```

```
DETERMINE
CONDENSATION TEMPERATURE CTi       S15  ┐
CONTROL TO
CONDENSATION TEMPERATURE CTi       S16  │  HEATING
                                        │  CONTROL UNIT
ACQUIRE BLOWOUT TEMPERATURE Tsa    S17  │  712
```

NO    BLOWOUT-TEMPERATURE
      PRIORITY MODE?                     S18

YES

NO    BLOWOUT TEMPERATURE Tsa
      < THRESHOLD TH?                    S19

YES

OPERATE AT CONDENSATION TEMPERATURE CT
WHERE Tsa ≥ THRESHOLD TH                 S20

19

# Fig. 9

ELECTRONIC CIRCUIT

910

911

EP 4 151 915 A1

## INTERNATIONAL SEARCH REPORT

| | International application No. |
|---|---|
| | PCT/JP2020/018993 |

### A. CLASSIFICATION OF SUBJECT MATTER
Int. Cl. F24F7/08(2006.01)i
FI: F24F7/08 101M

According to International Patent Classification (IPC) or to both national classification and IPC

### B. FIELDS SEARCHED

Minimum documentation searched (classification system followed by classification symbols)
Int. Cl. F24F7/08

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/193950 A1 (MITSUBISHI ELECTRIC CORP.) 23 December 2015, paragraphs [0022], [0024], [0025], [0029]-[0032], fig. 3, 4 | 1-5, 10 |
| Y | | 6-9 |
| Y | WO 2012/077201 A1 (MITSUBISHI ELECTRIC CORP.) 14 June 2012, paragraphs [0020], [0023] | 6-9 |
| A | JP 2002-317997 A (DAIKIN INDUSTRIES, LTD.) 31 October 2002, paragraphs [0031], [0043]-[0048] | 1-10 |
| A | JP 2017-161188 A (TOPRE CORP.) 14 September 2017, paragraphs [0020], [0040]-[0057] | 1-10 |
| A | WO 2016/002072 A1 (MITSUBISHI ELECTRIC CORP.) 07 January 2016, abstract | 1-10 |

☒ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20.07.2020 | 04.08.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/018993 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2015-143595 A (DAIKIN INDUSTRIES, LTD.) 06 August 2015, paragraphs [0029]-[0031], [0046]-[0048], [0058] | 1-10 |
| A | WO 2020/003446 A1 (MITSUBISHI ELECTRIC CORP.) 02 January 2020, paragraphs [0043]-[0045] | 1-10 |

Form PCT/ISA/210 (continuation of second sheet) (January 2015)

**INTERNATIONAL SEARCH REPORT**
Information on patent family members

International application No.

PCT/JP2020/018993

| Patent Documents referred to in the Report | Publication Date | Patent Family | Publication Date |
|---|---|---|---|
| WO 2015/193950 A1 | 23.12.2015 | (Family: none) | |
| WO 2012/077201 A1 | 14.06.2012 | EP 2650617 A1 paragraphs [0020], [0023] | |
| JP 2002-317997 A | 31.10.2002 | (Family: none) | |
| JP 2017-161188 A | 14.09.2017 | (Family: none) | |
| WO 2016/002072 A1 | 07.01.2016 | US 2017/0097165 A1 abstract EP 3165843 A1 CN 106461256 A | |
| JP 2015-143595 A | 06.08.2015 | (Family: none) | |
| WO 2020/003446 A1 | 02.01.2020 | (Family: none) | |

Form PCT/ISA/210 (patent family annex) (January 2015)

**EP 4 151 915 A1**

**Patent documents cited in the description**

- WO 2019008694 A